# EUROPEAN PATENT APPLICATION

(11) **EP 2 544 126 A1**
(43) Date of publication of application: **09.01.2013**
(21) Application number: 12161391.3
(22) Date of filing: 27.03.2012
(51) Int. Cl.: G06K 9/00, G06F 3/048

(54) **Recognition system based on augmented reality and remote computing and related method**

(30) Priority: 06.07.2011 TW 100123958
(71) Applicant: Acer Incorporated, New Taipei City 221 (TW)
(72) Inventor: Chen, Lien-Wu, 221 New Taipei City (TW); Tseng, Yu-Chee, 221 New Taipei City (TW); Peng, Yu-Hao, 221 New Taipei City (TW)
(74) Representative: Becker Kurig Straus

(57) **Abstract**

A recognition system (100) based on augmented reality and remote computing includes a terminal touch screen (102), a terminal processing unit (103), a remote database (112), and a remote computing unit (111). The terminal touch screen (102) fetches a recognition characteristic of an object to be recognized. The terminal processing unit (103) transmits the recognition characteristic and an icon (22) of an application program (14) required to be executed to the remote computing unit (111). The remote database (112) stores data corresponding to the recognition characteristic of the object to be recognized. The remote computing unit (111) receives the recognition characteristic and the icon (22), fetches name and address information from the remote database (112) according to the recognition characteristic and the icon (22), and transmits the name and address information to the terminal processing unit (103) to make a terminal module enter the application program (14).

## Description

This relates to a recognition system based on augmented reality and remote computing (cloud computing) and related method according to the pre-characterizing clauses of claims 1 and 8.

For correct operation of existing network application software or website services, it is necessary to know in advance the identification accounts of objects to be communicated with or objects to be searched for. These accounts also need to be inputted into corresponding application programs or websites, such as e-mail addresses, MSN (Microsoft network) identification, FaceBook identification, the FTP IP (File Transfer Protocol Internet Protocol), or keywords, etc., which is both inconvenient and time-consuming for Internet users.

With the development of communication technology, not only have construction layers, such as hardware, data, and network, achieved the transmission requirements of high speed and stability, but software development of application layers has also exceeded expansions. Various recognition methods and the user connecting statuses of the communication application programs turn out to be the key point for breaking barriers between people. When, however, an ordinary user is trying to have contact with and communicate with other persons, the user usually has to input the accounts or address information corresponding to those persons. As each contact has an individual account/address, it is impossible for the user to remember contact information for each person. In addition, it is not possible to switch between various application programs, thus the convenience of the network is not realized and the meaning of this breakthrough in information technology is lost.

Cloud computing has been developed over several years. The core concept of cloud computing is to manage and arrange considerable quantities of computing resources which are connected via the Internet for constructing a computing resource pool that can serve users according to their demands. Cloud computing resources can be used to solve the above problems, thereby making the application programs used during a communication procedure faster and more convenient.

### Summary of the Invention

This in mind, the invention aims at providing a system and method based on augmented reality and remote computing which easily accomplish a process of executing an application program or website function by pulling a facial image to an icon of an application program or to an icon of a website, or by pulling the icon of the application program or the icon of the website to the facial image. This is achieved by a recognition system and a recognition method thereof, according to claims 1 and 8, respectively. The dependent claims pertain to corresponding further developments and improvements.

As will be seen more clearly from the detailed description below, a claimed recognition system is provided, including a remote computing recognition device. The a remote computing recognition device includes a remote database and a remote computing unit. The remote database is arranged for storing data corresponding to a recognition characteristic of an object to be recognized. The remote computing unit is arranged for receiving the recognition characteristic of the object to be recognized and an icon of an application program to be executed, fetching name and address information from the remote database according to the recognition characteristic of the object to be recognized and the icon of the application program to be executed, and outputting the name and address information.

According to another aspect of the invention, a claimed recognition method is provided. The recognition method includes: receiving a recognition characteristic of an object to be recognized and an icon of an application program to be executed; fetching name and address information from a remote database according to the recognition characteristic of the object to be recognized and the icon of the application program to be executed; and outputting the name and address information.

The advantages of the present invention include a novel human-machine interface which accesses a communication identification account from the server and imports the communication identification account to the application program by utilizing a touch control manner to drag a facial image to an icon of an application program or to drag the icon of the application program to the facial image. The above manner is applicable to the existing network communication program nowadays and the new network application program developed in the future.

In the following, the invention is further illustrated by way of example, taking reference to the accompanying drawings. Thereof:
FIG. 1 is a diagram illustrating a recognition system based on augmented reality and remote computing according to an exemplary embodiment of the present invention;
FIG. 2 is a flowchart illustrating operations of a user terminal according to an exemplary embodiment of the present inventions;
FIG. 3 is a diagram illustrating an operating interface of a smart phone based on augmented reality and remote computing according to an exemplary embodiment of the present invention;
FIG. 4 is a flowchart of a user registration agreement based on augmented reality and remote computing according to an exemplary embodiment of the present invention; and
FIG. 5 is a flowchart illustrating the system operation based on augmented reality and remote computing.

### Detailed Description

The following paragraphs, combined with the illustrative diagrams, will describe the present invention in further details.

A recognition system based on augmented reality and remote computing includes: a terminal touch screen, for fetching a recognition characteristic of an object to be recognized; a terminal processing unit, for transmitting the recognition characteristic of the object to be recognized and an icon of an application program required to be executed to a remote computing unit; a remote database, for storing data corresponding to the recognition characteristic of the object to be recognized; and the remote computing unit, for receiving the recognition characteristic of the object to be recognized and the icon of the application program to be executed, and fetching a corresponding name and address information from the remote database according to the recognition characteristic of the object to be recognized and the icon of the application program to be executed, and transmitting the corresponding name and address information to the terminal processing unit to make a terminal module enter the application program to be executed.

Furthermore, the aforementioned recognition characteristic of the object to be recognized is a facial image; and the aforementioned terminal touch screen fetches the recognition characteristic of the object to be recognized by a picture and a coordinate derived from pressing a coordinate of a facial image in a picture and then moving the facial image to an icon of an application program on the terminal touch screen, or dragging the icon of the application program to the facial image.

Furthermore, the aforementioned remote database may include a sufficient number of clear and qualified facial images for acting as a comparing basis for face recognition; and the aforementioned remote computing unit may determine a corresponding facial image according to the picture and the coordinate, and perform face recognition by comparing the corresponding facial image with the facial images stored in the remote database.

Furthermore, the aforementioned application program includes, but is not limited to, e-mail, MSN, FaceBook, FTP IP, on-line game, business card, Google, YouTube, Skype, or e-Bay.

Furthermore, the aforementioned remote database includes, but is not limited to, e-mail address, MSN account, FaceBook account, FTP IP, on-line game, business card, Google account, YouTube account, Skype account, and/or e-Bay account.

A user terminal includes: a terminal touch screen for fetching a recognition characteristic of an object to be recognized; and a terminal processing unit for transmitting the recognition characteristic of the object to be recognized and an icon of an application program to be executed to a remote computing unit for executing the application program.

Furthermore, the aforementioned recognition characteristic of the object to be recognized is a facial image; and the aforementioned terminal touch screen fetches the recognition characteristic of the object to be recognized by a picture and a coordinate derived from pressing a coordinate of a facial image in a picture on the terminal touch screen and then moving the facial image to the icon of the application program, or dragging the icon of the application program to the facial image.

Furthermore, the aforementioned application program includes, but is not limited to, e-mail, MSN, FaceBook, FTP IP, on-line game, business card, Google, YouTube, Skype or e-Bay.

A remote computing recognition device includes: a remote database for storing data corresponding to the recognition characteristic of the object to be recognized; and a remote computing unit for receiving the recognition characteristic of the object to be recognized and the icon of the application program to be executed, and fetching a corresponding name and address information from the remote database according to the recognition characteristic of the object to be recognized and the icon of the application program to be executed, and transmitting the corresponding name and address information.

Furthermore, the aforementioned recognition characteristic of the object to be recognized is a facial image.

Furthermore, the aforementioned remote database includes a sufficient number of clear and qualified facial images for acting as a comparing basis for face recognition; and the aforementioned remote computing unit determines a corresponding facial image according to the picture and the coordinate, and performs face recognition by comparing the corresponding facial image with the facial images stored in the remote database.

Furthermore, the aforementioned remote database includes, but is not limited to, e-mail address, MSN account, FaceBook account, FTP IP, on-line game, business card, Google account, YouTube account, Skype account, and/or e-Bay account.

A recognition method based on augmented reality and remote computing includes: fetching a recognition characteristic of an object to be recognized, transmitting the recognition characteristic of the object to be recognized and an icon of an application program to be executed to a remote computing unit, fetching a corresponding name and address information from a remote database according to the recognition characteristic of the object to be recognized and the icon of the application program to be executed, transmitting the corresponding name and address information to a terminal processing unit for executing the application program.

Furthermore, the aforementioned recognition characteristic of the object to be recognized is a facial image.

Furthermore, the step of fetching the recognition characteristic of the object to be recognized includes obtaining the aforementioned coordinate by pressing a coordinate of a facial image in a picture at the user terminal and then moving the facial image to the icon of the application program, or dragging the icon of the application program to the facial image.

Furthermore, the aforementioned remote database includes a sufficient number of clear and qualified facial images for acting as a comparing basis for face recognition; and the step of fetching the corresponding name and address information includes performing the face recognition by comparing a determined facial image with the facial images stored in the remote database and then fetching the corresponding name and address information accordingly.

A remote computing recognition method includes: receiving a recognition characteristic of an object to be recognized and an icon of an application program to be executed, fetching a corresponding name and address information from a remote database according to the recognition characteristic of the object to be recognized and the icon of the application program to be executed, and transmitting the corresponding name and address information to a user terminal.

Furthermore, the aforementioned recognition characteristic of the object to be recognized is a facial image.

Furthermore, the aforementioned remote database includes a sufficient number of clear and qualified facial images for acting as a comparing basis for face recognition; and the step of fetching the corresponding name and address information includes: performing face recognition by comparing a determined facial image with the facial images stored in the remote database and then obtaining the corresponding name and address information accordingly.

A recognition method of a user terminal includes: fetching a recognition characteristic of an object to be recognized, transmitting the recognition characteristic of the object to be recognized and an icon of an application program to be executed to a remote server, and obtaining a corresponding name and address information from the remote server for executing the application program.

Furthermore, the aforementioned recognition characteristic of the object to be recognized is a facial image; and the step of fetching the recognition characteristic of the object to be recognized includes obtaining the aforementioned coordinate by pressing a coordinate of a facial image in a picture at the user terminal and then moving the facial image to the icon of the application program, or dragging the icon of the application program to the facial image.

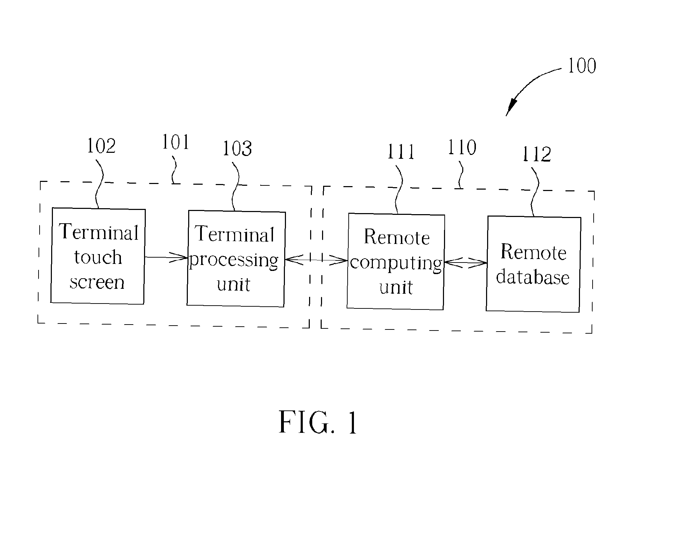

The present invention can be achieved via an electronic product/device having a camera and a screen and a cloud computing platform. Please refer to FIG. 1. FIG. 1 is a diagram illustrating a recognition system 100 based on augmented reality and remote computing according to an exemplary embodiment of the present invention. The recognition system 100 includes a user terminal 101 and a remote computing recognition device 110. The user terminal 101 includes a terminal touch screen 102 used for fetching a recognition characteristic of an object to be recognized; and a terminal processing unit 103 used for transmitting the recognition characteristic of the object to be recognized and an icon of an application program required to be executed to a remote computing unit 111. The remote computing recognition device 110 includes a remote database 112 used for storing data corresponding to the recognition characteristic of the object to be recognized; and the remote computing unit 111 used for receiving the recognition characteristic of the object to be recognized and the icon of the application program required to be executed, fetching the desired name and address information from the remote database 112 according to the recognition characteristic of the object to be recognized and the icon of the application program required to be executed, and transmitting the name and address information to the terminal processing unit 103 for making a terminal module enter the application program required to be executed. In an alternative embodiment, the user terminal 101 may be a smart phone, a tablet personal computer (tablet PC), or an electronic produce/device with a camera and a screen. However, these are for illustrative purposes only, and are not meant to be limitations of the present invention.

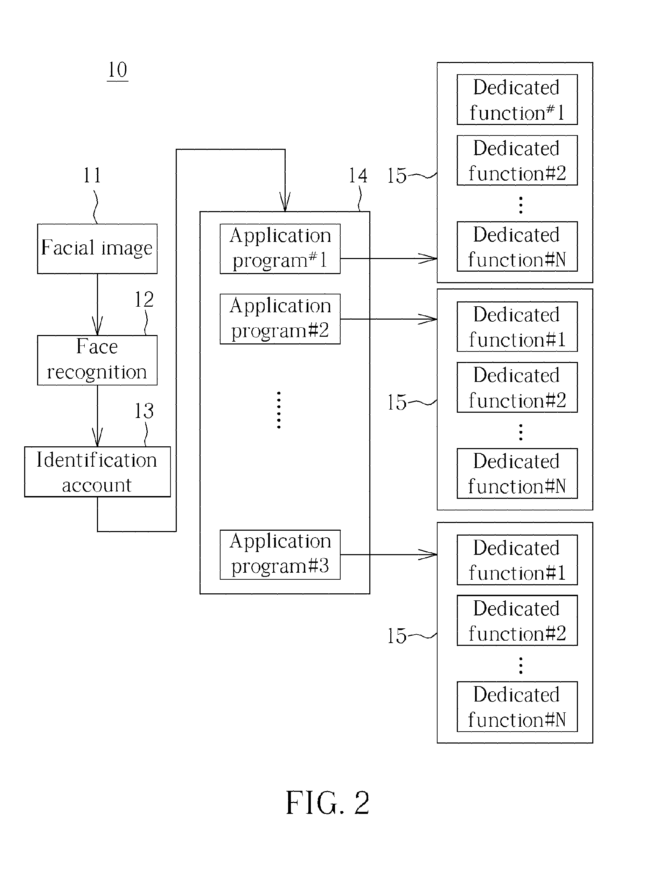

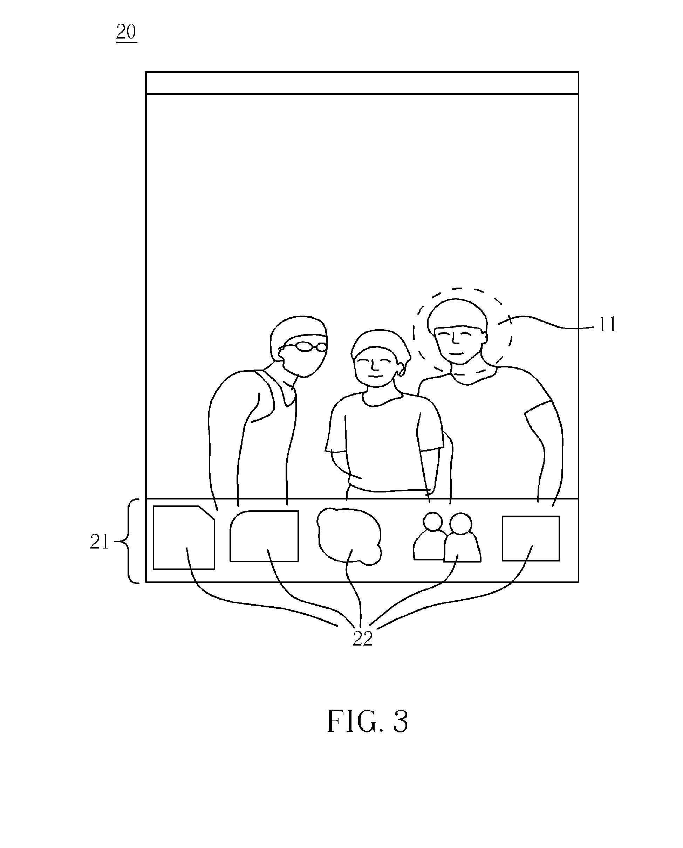

As shown in FIG. 2 and FIG. 3, the recognition characteristic of the object to be recognized is a facial image; the terminal touch screen fetches the recognition characteristic of the object to be recognized by a picture and a coordinate derived from pressing a facial image in a picture on the terminal touch screen 102 and recording the said coordinate, and then dragging the facial image to the icon of the application program, or by dragging the icon of the application program to the facial image. In this way, the user makes the fetched facial image correspond to the identification account 13 through the face recognition 12, and chooses the dedicated functions 15 of the application program according the application program 14 to be executed. The method employs the existing face recognition technology, such as comparing with various facial images in the cloud server, accessing the user identity which passes the authentication, and providing the user authentication data required by the related program operations or required by the related website services, to thereby execute different functions and services of the application programs. In this way, the users can save their time when using several application programs; besides, the initialization manners of various application programs can be merged and simplified. Hence, user's satisfaction of the network service can be improved.

The remote database 112 includes a sufficient number of clear and qualified facial images 11 for acting as a comparing basis for face recognition. The remote computing unit 111 determines a corresponding facial image 11 according to the picture in the terminal touch panel 102 and the coordinate thereof, and performs face recognition by comparing the corresponding facial image 11 with the facial images stored in the remote database 112.

In an exemplary embodiment of the present invention, the user sees the operating interface 20 of the smart phone as shown in FIG. 3. The horizontal bar-shaped section located at the bottom and occupying 1/6 of the screen is the application program list 21. The application program list 21 illustrates the storage space built within the cell phone, or a local storage device of the cell phone, such as various icons 22 of application programs or websites in the SD (Secure Digital) card. The user may drag the facial image 11 in the picture to any of the icons 22 of the application programs or websites in the application program list 21, or drag one of the icons 22 of the application programs or websites to the facial image 11, where the particular application program/website would execute the corresponding program operations/website services. This helps to select particular users, manage a lot of contact persons, and use various network service programs more efficiently.

In the present invention, the application programs include, but are not limited to, e-mail, MSN, FaceBook, FTP IP, on-line game, business card, Google, YouTube, Skype account, and/or e-Bay.

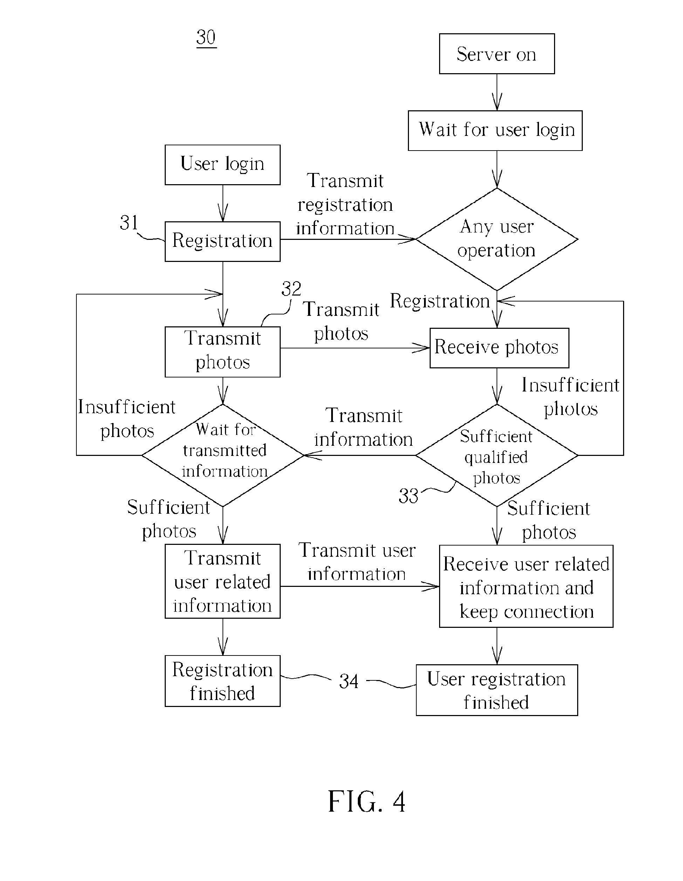

The following exemplary embodiment uses FaceBook as an example. Please refer to FIG. 4, which is a flowchart of a user registration agreement 30. Before using the system, in step 31, the user may register at a cloud server or import a face database of FaceBook automatically. Once the user has his/her FaceBook account, he/she can use the uploaded registration information of FaceBook and the facial image to acquire the identification account data, such as the e-mail address, thus simplifying the step of uploading data to the cloud server. When registering, the user has to take several pictures of his/her own face, where each of the pictures must include a clear facial image. In step 32, these photos are transmitted to the cloud server. In step 33, these photos are checked to see if they are qualified facial pictures. In step 34, qualified pictures will be stored in the remote database 112 as an important comparing basis of face recognition until the number of the uploaded photos satisfies the setting of the server. In the present invention, the system creates a user list at the remote database 112, and the user list records a group consisting of the cell phone information of users, the e-mail addresses, the MSN accounts, the MSN accounts, the FaceBook accounts, the FTP IPs, the on-line games, the business cards, the Google accounts, the YouTube accounts, the Skype accounts, and/or the e-Bay accounts. The system can be used right after the registration is accomplished.

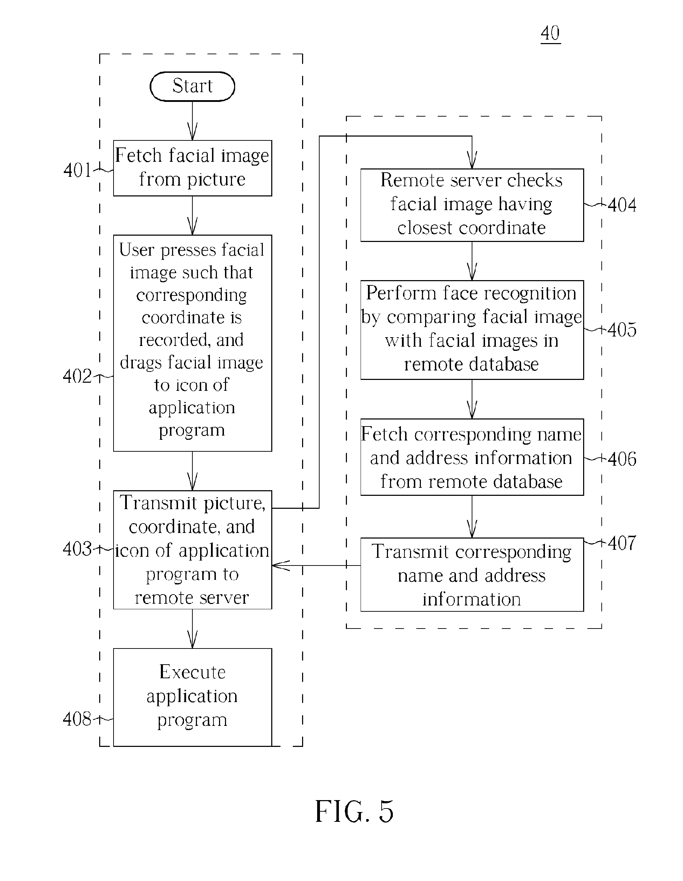

FIG. 5 is a flowchart of a recognition method 40 based on augmented reality and remote computing according to an exemplary embodiment of the present invention. Please refer to the recognition system 100 based on augmented reality and remote computing as illustrated in FIG. 1 in conjunction with the recognition method 40 based on augmented reality and remote computing as illustrated in FIG. 5. The recognition method 40 based on augmented reality and remote computing includes a recognition method 400 at a user terminal and a remote computing recognition method 110, which correspond to the user terminal 101 and the remote computing recognition device 110 shown in FIG.1, respectively. The details of the recognition method 40 based on augmented reality and remote computing are described as follows.
- Step 401:: Fetch a facial image from one picture in the user's cell phone;
- Step 402:: The user presses the facial image 11 in the picture such that a corresponding coordinate is recorded, and then drags the facial image 11 to the icon 22 of the application program, or drags the icon 22 of the application program or the website to the facial image11. In this step, after the facial image 11 or the icon 22 of the application program is dragged by user's finger, the user's finger is raised up and the cell phone will obtain a picture taken from its lens to thereby obtain a picture with the facial image 11;
- Step 403:: Transmit the picture, the coordinate, and the icon 22 of the application program to the remote server;
- Step 404:: The remote server checks a facial image 11 with the closest coordinate;
- Step 405:: Perform face recognition by comparing the facial image 11 with the facial images stored in the remote database112;
- Step 406:: Fetch a corresponding name and address information from the remote database112;
- Step 407:: Transmit the corresponding name and address information to the user terminal; and
- Step 408:: Execute the application program.

By using the aforementioned method, the user does not need to input the identification account of anyone to be contacted, does not need to ask the related identification accounts and/or address information corresponding to each of the application programs of the person to be contacted, and does not need to remember any related identification accounts or the address information, which effectively reduces the inconvenience of the user.

One of the technical features of the present invention is bases on augmented reality, which allows the user to drag the facial image 11 in the picture to any of the icons of application programs or websites in the application program list 21, or to drag one of the icons of the application programs or the websites to the facial image 11, to thereby acquire the corresponding communication account of the facial image and trigger specific program functions or specific website services. A possible application scenario is dragging the facial image to the application program/website or dragging the application program/website to the facial image such that the system in the present invention can automatically execute any network software or website service which requires a contact person's user identify without additional input of the account identification, thereby reducing the inconvenience of orally asking or computer recording. Moreover, as long as the user has his/her own website account, the user is allowed to acquire the communication identification account by using the uploaded registration data and the uploaded facial image, or the user is allowed to downloaded the specific software dedicated to the service to register and to execute the operations of the application programs or the website services in advance.

All combinations and sub-combinations of the above-described features also belong to the invention.

## Claims

1. A recognition system (100), **characterized by**:
a remote computing recognition device (110), comprising:
a remote database (112), arranged for storing data corresponding to a recognition characteristic of an object to be recognized; and
a remote computing unit (111), arranged for receiving the recognition characteristic of the object to be recognized and an icon of an application program to be executed, fetching name and address information from the remote database (112) according to the recognition characteristic of the object to be recognized and the icon of the application program to be executed, and outputting the name and address information.

2. The recognition system (100) of claim 1, **characterized in that** the recognition characteristic of the object to be recognized is a facial image.

3. The recognition system (100) of claim 1, **characterized in that** the remote database (112) comprises a sufficient number of clear and qualified facial images for acting as a comparing basis for face recognition, and the remote computing unit (111) determines a corresponding facial image according to the picture and the coordinate, and performs face recognition by comparing the determined facial image with the facial images in the remote database (112).

4. The recognition system (100) of claim 1, **characterized in that** the remote database (112) comprises e-mail address, MSN account, FaceBook account, FTP IP, on-line game, business card, Google account, YouTube account, Skype account, or e-Bay account.

5. The recognition system (100) of claim 1, **characterized in that** the recognition system (100) further comprises:
a user terminal (101), comprising:
a terminal touch screen (102), arranged for fetching the recognition characteristic of the object to be recognized; and
a terminal processing unit (103), arranged for transmitting the recognition characteristic of the object to be recognized and the icon of the application program to be executed to the remote computing unit (111) for executing the application program;
wherein the remote computing unit (111) transmits the name and address information to the terminal processing unit (103) to make a terminal module enter the application program to be executed.

6. The recognition system (100) of claim 5, **characterized in that** the recognition characteristic of the object to be recognized is a facial image; and the terminal touch screen (102) fetches the recognition characteristic of the object to be recognized by a picture and a coordinate derived from pressing a coordinate of the facial image in the picture and dragging the facial image to the icon of the application program, or dragging the icon of the application program to the facial image.

7. The recognition system (100) of claim 5, **characterized in that** the application program comprises e-mail, MSN, FaceBook, FTP IP, on-line game, business card, Google, YouTube, Skype, or e-Bay.

8. A recognition method, **characterized by**:
receiving a recognition characteristic of an object to be recognized and an icon of an application program to be executed;
fetching name and address information from a remote database (112) according to the recognition characteristic of the object to be recognized and the icon of the application program to be executed; and
outputting the name and address information.

9. The recognition method of claim 8, **characterized in that** the recognition characteristic of the object to be recognized is a facial image.

10. The recognition method of claim 8, **characterized in that** the remote database (112) comprises a sufficient number of clear and qualified facial images for acting as a comparing basis for face recognition, and the step of fetching the name and address information comprises:
performing face recognition by comparing a determined facial image with the facial images in the remote database (112).

11. The recognition method of claim 8, **characterized in that** the remote database (112) comprises e-mail address, MSN account, FaceBook account, FTP IP, on-line game, business card, Google account, YouTube account, Skype account, or e-Bay account.

12. The recognition method of claim 8, **characterized in that** the recognition method further comprises:
utilizing a user terminal (101) for:
fetching the recognition characteristic of the object to be recognized;
transmitting the recognition characteristic of the object to be recognized and the icon of the application program to be executed; and obtaining the name and address information for executing the application program.

13. The recognition method of claim 12, **characterized in that** the recognition characteristic of the object to be recognized is a facial image; and the step of fetching the recognition characteristic of the object to be recognized comprises:
obtaining a coordinate by pressing the coordinate of the facial image in a picture and dragging the facial image to the icon of the application program, or dragging the icon of the application program to the facial image.

14. The recognition method of claim 12, **characterized in that** the application program comprises e-mail, MSN, FaceBook, FTP IP, on-line game, business card, Google, YouTube, Skype, or e-Bay.
